# EUROPEAN PATENT APPLICATION

(11) **EP 4 360 457 A1**
(43) Date of publication of application: **01.05.2024**
(21) Application number: 22828219.0
(22) Date of filing: 08.06.2022
(51) Int. Cl.: A01N 59/16, A01P 3/00, C01G 41/00, C09D 17/00

(54) **ANTIBACTERIAL MATERIAL, ANTIBACTERIAL MATERIAL LIQUID DISPERSION, ANTIBACTERIAL MATERIAL DISPERSION, AND METHOD FOR PRODUCING SAME**

(30) Priority: 21.06.2021 JP 2021102257
(71) Applicant: SUMITOMO METAL MINING CO., LTD., Tokyo 105-8716 (JP)
(72) Inventor: OKADA Mika, Isa-shi, Kagoshima 895-2501 (JP); SATO Keiichi, Isa-shi, Kagoshima 895-2501 (JP)
(74) Representative: TBK
(86) International application number: PCT/JP2022/023052
(87) International publication number: WO 2022/270302

(57) **Abstract**

Provided is an antibacterial material containing composite tungsten oxide fine particles, which is represented by a general formula MxWyOz.

## Description

### Technical Field

The present invention relates to an antibacterial material, an antibacterial material dispersion liquid, an antibacterial material dispersion body used for eliminating bacteria in various industrial products, household goods, etc., and a method for producing them.

### Description of Related Art

Cationic bactericides, biguanide bactericides, halogenated diphenyl ethers, and compounds similar to these are widely known as substances with antibacterial effects. Patent document 1 proposes that a mixture of one or more selected from cetylpyridinium hydrochloride, chlorhexidine, triclosan, and irgasan is preferable as the bactericides.

On the other hand, heavy metal ions such as zinc, silver, and copper are widely known as substances that have antibacterial effects. Patent document 2 describes an antibacterial agent containing a silver chloro complex salt, and describes that unlike thiosulfate acetate, silver chloro complex does not contain S²⁻ ions, and therefore it is stable and does not decompose with heat or acid to generate toxic gas or turn black due to the formation of silver sulfide.

### Prior art document

### Patent document

[Patent Document 1] Japanese Patent Application Laid-Open No. 10-236914
[Patent Document 2] Japanese Patent Application Laid-Open No. 10-182326

### Summary of the Invention

### Problem to be solved by the invention

However, according to the studies conducted by the present inventors, it has been found that the descriptions in Patent documents 1 and 2 have the following problems.

The bactericide described in Patent document 1 is an organic substance. As a result, it was thought that the applications and methods of use would be limited because the stability in the environment is insufficient.

The antibacterial agent containing a silver chloro complex salt described in Patent document 2 is stable compared to thiosulfate acetate, etc. However, when silver chloro complex salt is exposed to the atmosphere for a long period of time, it was thought that it would react with H₂S gas, SO₂ gas, etc., contained in the atmosphere, and a high antibacterial effect cannot be exhibited in some cases. Further, the silver chloro complex salt may turn black by reacting with H₂S gas, SO₂ gas, etc., in the atmosphere.

The present invention was made under the above-described circumstance, and the problem to be solved is to provide an antibacterial material, an antibacterial material dispersion liquid, an antibacterial material dispersion body which maintain an antibacterial effect even when exposed to the atmosphere for a long period of time and do not change color, and a method for producing them.

### Means for solving the problem

In order to solve the above problems, the present inventors conducted research and found that composite tungsten oxide fine particles, which are inorganic fine particles, have an antibacterial effect, and found that the composite tungsten oxide fine particles maintain their antibacterial effect even when exposed to the atmosphere for a long period of time, and that in addition to being an inorganic substance that does not change color, the composite tungsten oxide fine particles also does not change color even when exposed to H₂S gas or SO₂ gas in the atmosphere.

That is, in order to solve the above-described problem, first invention provides an antibacterial material containing composite tungsten oxide fine particles, which is represented by a general formula MxWyOz (wherein element M is one or more elements selected from alkali metals and alkaline earth metals, W is tungsten, O is oxygen, and 0.01 ≤ x/y ≤ 1.0, 2.2 ≤ z/y ≤ 3.0).

Second invention provides the antibacterial material according to the first invention, wherein the composite tungsten oxide fine particles include a hexagonal crystal structure.

Third invention provides the antibacterial material according to the first or second invention, wherein the composite tungsten oxide fine particles have an average particle size of 10 nm or more and 200 nm or less.

Fourth invention provides an antibacterial material dispersion liquid containing the antibacterial material according to any one of the first to third inventions and a solvent.

Fifth invention provides an antibacterial material dispersion body containing the antibacterial material according to any one of the first to third inventions and a solid medium.

Sixth invention provides a method for producing an antibacterial material, including:
a first step of producing a composite tungsten oxide having a hexagonal crystal structure expressed by a general formula MxWyOz (wherein, element M include one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, and 0.01≤ x/y ≤ 1.0, 2.2 ≤ z/y ≤ 3 .0); and
a second step of mechanically pulverizing the composite tungsten oxide obtained in the first step, to produce composite tungsten oxide fine particles having a lattice constant in a hexagonal crystal structure in which a-axis is 7.3850 Å or more and 7.4186 Å or less and c-axis is 7.5600 Å or more and 7.6240 Å or less, and having a particle size of 100 nm or less.

### Advantage of the Invention

The antibacterial material containing composite tungsten oxide fine particles according to the present invention maintains its antibacterial effect even when exposed to the atmosphere for a long period of time, and it did not change color, nor did it change color even when exposed to H₂S gas or SO₂ gas in the atmosphere.

### Brief description of the drawings

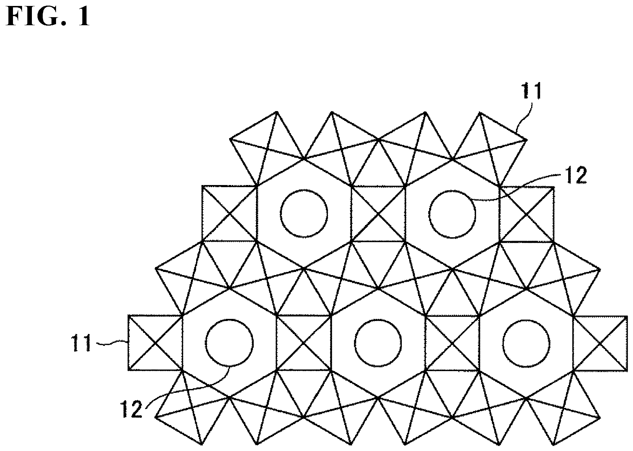

FIG. 1 is a schematic plan view of a hexagonal crystal structure.

### Detailed Description of the Invention

An antibacterial material according to the present invention contains composite tungsten oxide fine particles expressed by a general formula MxWyOz (wherein, element M includes one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, and 0.01≤ x/y ≤ 1.0, 2.2 ≤ z/y ≤ 3 .0).

The antibacterial material according to the present invention has a form of an antibacterial material dispersion body in which the composite tungsten oxide fine particles are dispersed in a suitable solid medium such as a suitable solvent or resin.

Then, examples of the antibacterial material dispersion body according to the present invention include: an antibacterial film in which the antibacterial material dispersion body is formed on a surface of a base material or article, an antibacterial plate in which the antibacterial material dispersion body is formed in a plate shape, an antibacterial film in which the antibacterial material dispersion body is formed into a film, and further, an antibacterial molded article made by molding the antibacterial material dispersion body into the shape of containers and other articles, and antibacterial fiber.

Hereinafter, regarding the mode for implementing the present invention, 1. Composite tungsten oxide fine particles, 2. Method for producing composite tungsten oxide fine particles, 3. Antibacterial effect of composite tungsten oxide fine particles, 4. Antibacterial material dispersion liquid, 5. Antibacterial material dispersion body will be explained in detail in this order.

### 1. Composite tungsten oxide fine particles

Composite tungsten oxide fine particles contained in the antibacterial material according to the present invention are known as a material that transmits light in a visible region of sunlight with a wavelength of 380 nm to 780 nm, and absorbs light in a near-infrared region with a wavelength of 780 nm or more. Then, the composite tungsten oxide is expressed by a general formula MxWyOz (wherein, element M includes one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, and O is oxygen), and from a viewpoint of stability, the element M is more preferably one or more elements selected from alkali metals and alkaline earth metals, and even more preferably belongs to the alkali metals.

It is preferable to satisfy 2.2 ≤ z/y ≤ 3.0 in consideration of an electronic state of the composite tungsten oxide.

On the other hand, the ratio of the element M to W is preferably 0.01 ≤ x/y ≤ 1.0. The composite tungsten oxide also has an upper limit in an amount of additive element M that can be added due to its structure, and a maximum amount of the additive element M added to 1 mol of tungsten is 1 mol in a case of cubic crystal, and about 0.5 mol in a case of tetragonal crystal (it varies depending on a type of the element M, but the amount that can be easily produced industrially is about 0.5 mol.). The amount of the additive element M is preferably 0.2 or more and 0.5 or less in terms of x/y, and more preferably 0.22 ≤ x/y ≤ 0.37. When z/y = 3, the value of x/y is 0.33, so as shown in FIG. 1, it is thought that the additive element M is arranged in all hexagonal voids, resulting in a hexagonal crystal structure. FIG. 1 is a schematic plan view of the hexagonal crystal structure. In FIG. 1, six octahedrons formed by WOe units, denoted by reference numeral 11, are assembled to form a hexagonal void (tunnel), and in this void, the element M denoted by reference numeral 12 is arranged to form one unit, and a large number of this one unit are aggregated to form a hexagonal crystal structure.

Further, when cations of the element M are added and present in the hexagonal voids, generally, when the element M having a large ionic radius is added, the hexagonal crystal is formed. Specifically, it is preferable to add one or more selected from Cs, Rb, K, Ba, Li, Ca, and Sr because the hexagonal crystal is likely to be formed.

Further, among these elements M having a large ionic radius, composite tungsten oxide fine particles to which one or more selected from Cs and Rb are added are preferable because they are chemically stable.

The composite tungsten oxide fine particles have a tetragonal, cubic, or hexagonal tungsten bronze structure that efficiently absorbs infrared rays and improves antibacterial effects. An absorption position in the near-infrared region tends to change depending on the crystal structure of the composite tungsten oxide fine particles, and the absorption position in this near-infrared region tends to move toward a longer wavelength in the tetragonal crystal than cubic crystal, and toward a longer wavelength in the hexagonal crystal than tetragonal crystal. Further, accompanying this variation in the absorption position, the hexagonal crystal has a least absorption in the visible light region, followed by the tetragonal crystal, and the cubic crystal has a highest absorption among these. Therefore, from a viewpoint of improving the antibacterial effect while ensuring a design by transmitting more light in the visible region and absorbing more light in the infrared region, it is preferable to use hexagonal tungsten bronze.

Similarly, from a viewpoint of improving the antibacterial effect while ensuring a design, it is preferable that an average particle size of the composite tungsten oxide fine particles is 800 nm or less. The particle size of the composite tungsten oxide fine particles can be obtained by measuring the particle size of 100 composite tungsten oxide ultrafine particles from a transmission electron microscope image using an image processing device, and calculating an average value.

Also, the composite tungsten oxide fine particles contained in the antibacterial material according to the present invention are preferably single crystals in which a volume ratio of an amorphous phase is 50% or less.

When the composite tungsten oxide fine particles are single crystals with an amorphous phase volume ratio of 50% or less, a crystallite size can be reduced to 200 nm or less while maintaining a lattice constant within a predetermined range. By setting the crystallite size of the composite tungsten oxide fine particles to 200 nm or less, a dispersed particle size can be 1 nm or more and 200 nm or less.

This is because in the composite tungsten ultrafine particles, when the particle size is 1 nm or more and 200 nm or less and the amorphous phase is 50% or less in volume ratio, or when it is not polycrystalline, the lattice constant can be maintained within a predetermined range, and antibacterial properties can be fully exhibited.

Then, the crystallite size of the composite tungsten oxide fine particles is more preferably 200 nm or less and 10 nm or more, and even more preferably 100 nm or less and 10 nm or more. This is because when the crystallite size is in the range of 100 nm or less and 10 nm or more, excellent antibacterial properties are exhibited.

The lattice constant of the composite tungsten oxide fine particles in the composite tungsten oxide fine particle dispersion liquid after being crushed, pulverized, or dispersed as described below, is maintained in the lattice constant of the composite tungsten oxide fine particles obtained by removing volatile components in the composite tungsten oxide fine particle dispersion liquid according to the present invention, and in the lattice constant and crystallite size of the composite tungsten oxide fine particles contained in the dispersion body obtained from the dispersion liquid.

As a result, in the dispersion liquid of the composite tungsten oxide fine particles and the dispersion body of the composite tungsten ultrafine particles obtained from the dispersion liquid, when a crystal state such as the lattice constant and crystallite size of the composite tungsten oxide fine particles, is the crystal state of the composite tungsten oxide fine particles that can be used in the present invention, the effect of the present invention is exhibited.

It can be confirmed that the composite tungsten oxide fine particles are single crystals because no grain boundaries are observed inside each fine particle, and only uniform lattice fringes are observed in an image by an electron microscope such as a transmission electron microscope. Further, it can be confirmed that the volume ratio of the amorphous phase in the composite tungsten oxide fine particles is 50% or less because uniform lattice fringes are observed throughout the particles and there are almost no areas where the lattice fringes are unclear similarly in the image by the transmission electron microscope. Since the amorphous phase often exists at an outer periphery of the particle, it is often possible to calculate the volume ratio of the amorphous phase by focusing on the outer periphery of the particle. For example, in true spherical composite tungsten oxide fine particles, when the amorphous phase with unclear lattice fringes exists in a layer on the outer periphery of the particle, the volume ratio of the amorphous phase in the composite tungsten oxide fine particles is 50% or less if the thickness is 20% or less of the particle size.

On the other hand, when the composite tungsten oxide fine particles are dispersed in a matrix of a solid medium such as a resin constituting the antibacterial material dispersion body, the composite tungsten oxide fine particles can be said to be a single crystal with an amorphous phase volume ratio of 50% or less if the difference obtained by subtracting the crystallite size from the average particle size of the dispersed composite tungsten oxide fine particles is 20% or less.

Further, it is preferable that the lattice constant is 7.3850 Å or more and 7.4186 Å or less for the a-axis, and 7.5600 Å or more and 7.6240 Å or less for the c-axis.

In the case of Rb tungsten oxide fine particles in which Rb is selected as the element M, the lattice constant is preferably 7.3850 Å or more and 7.3950 Å or less for the a-axis and 7.5600 or more and 7.5700 Å or less for the c-axis.

In the case of CsRb tungsten oxide fine particles in which Cs and Rb are selected as the element M, the lattice constant is preferably 7.3850 Å or more and 7.4186 Å or less for the a-axis, and preferably 7.5600 Å or more and 7.6240 Å or less for the c-axis.

The element M is not limited to the above Cs and Rb. Even when the element M is an element other than Cs or Rb, it may be present as an added element M in the hexagonal void formed by the WOe unit.

The crystal structure of the composite tungsten oxide fine particles can be specified by an X-ray diffraction pattern, and the lattice constant and crystallite size can be calculated using the Rietveld method.

### 2. Method for producing composite tungsten oxide fine particles

The method for producing composite tungsten oxide fine particles according to the present invention will be explained in the following order: (1) solid phase reaction method, (2) plasma synthesis method, and (3) micronization of composite tungsten oxide.

### (1) Solid phase reaction method

The composite tungsten oxide particles expressed by the general formula MxWyOz according to the present invention can be produced by a solid-phase reaction method in which a tungsten compound, which is a starting material for tungsten oxide fine particles, is heat-treated in a reducing gas atmosphere, a mixed gas atmosphere of a reducing gas and an inert gas, or an inert gas atmosphere. The composite tungsten oxide fine particles obtained by undergoing the heat treatment and being micronized by pulverization, etc., to a predetermined particle size have desirable properties as an antibacterial material, as described below.

A powder obtained by mixing at least one type of powder selected from tungsten trioxide powder, tungsten dioxide powder, tungsten oxide hydrate, tungsten hexachloride powder, or ammonium tungstate powder, or tungsten oxide hydrate powder obtained by dissolving tungsten hexachloride in alcohol and then drying it, or tungsten oxide hydrate powder obtained by dissolving tungsten hexachloride in alcohol, adding water to precipitate it and drying it, or tungsten compound powder obtained by drying ammonium tungstate aqueous liquid, or metal tungsten powder, and a single substance or a compound powder containing the above element M, in a ratio of 0.01 ≤ x/y ≤ 1.0, can be used as a starting material for obtaining composite tungsten oxide particles expressed by the general formula MxWyOz according to the present invention.

Further, when the tungsten compound, which is the starting material for obtaining the composite tungsten oxide particles, is in the form of a liquid or dispersion liquid, each element can be easily mixed uniformly.

From this viewpoint, it is more preferable that the starting material for composite tungsten oxide fine particles is a powder obtained by mixing an alcoholic liquid of tungsten hexachloride or an aqueous ammonium tungstate liquid, with a liquid of the compound containing the element M and then drying the mixture.

From this viewpoint, it is also preferable that the starting material for composite tungsten oxide fine particles is a powder obtained by mixing a dispersion liquid in which tungsten hexachloride is dissolved in alcohol and then water is added to form a precipitate, with a powder of a single substance or a compound containing the element M, or a liquid of a compound containing the element M.

Examples of the compound containing the element M include tungstates, chlorides, nitrates, sulfates, oxalates, oxides, carbonates, and hydroxides of the element M, but is not limited thereto, and any material that can be in the form of a liquid may be used. Further, when producing the composite tungsten oxide fine particles industrially, use of the tungsten oxide hydrate powder or tungsten trioxide and element M carbonate or hydroxide, is a preferred production method because no harmful gases are generated during heat treatment and other steps.

Here, heat treatment conditions for composite tungsten oxide particles in a reducing atmosphere or in a mixed gas atmosphere of the reducing gas and an inert gas will be described.

First, the starting material is heat-treated in the reducing gas atmosphere or in the mixed gas atmosphere of reducing gas and an inert gas. A heat treatment temperature at this time is preferably higher than the temperature at which the composite tungsten oxide particles crystallize. Specifically, the temperature is preferably 500°C or more and 1000°C or less, more preferably 500°C or more and 800°C or less. If desired, further heat treatment may be performed at a temperature of 500°C or more and 1200°C or less in the inert gas atmosphere.

Further, the reducing gas is not particularly limited, but H₂ is preferred. Further, when using H₂ as a reducing gas, the concentration is not particularly limited and may be appropriately selected depending on a firing temperature and an amount of the starting material, and for example, is 20 vol% or less, preferably 10 vol% or less, more preferably 7 vol% or less. This is because when the concentration of the reducing gas is 20 vol % or less, it is possible to avoid the generation of WO₂ which does not have an antibacterial effect due to rapid reduction.

Through the heat treatment, 2.2 ≤ z/y ≤ 3.0 is satisfied in the composite tungsten oxide.

### (2) Plasma synthesis method

The composite tungsten oxide particles expressed by the general formula MxWyOz according to the present invention can also be produced by a thermal plasma method by setting appropriate production conditions. The production conditions that should be set appropriately include, for example, a supply rate when feeding raw materials into thermal plasma, a flow rate of a carrier gas used for supplying raw materials, a flow rate of the plasma gas that maintains a plasma region, and a flow rate of sheath gas flowing just outside the plasma region, etc.

The steps up to heat treatment to obtain composite tungsten oxide particles, which are explained in "(1) Solid phase reaction method" and "(2) Plasma synthesis method" above, are the first step according to the present invention.

### (3) Micronization of composite tungsten oxide

A bulk body or particles of the composite tungsten oxide can be micronized by passing through the composite tungsten oxide fine particle dispersion liquid, which will be described later. Specifically, the bulk body or particles of the composite tungsten oxide are mixed with an appropriate solvent, loaded into a bead mill, paint shaker, etc., and pulverized and mixed to obtain a composite tungsten oxide fine particle dispersion liquid in which the particles are pulverized to a desired particle size.

In the micronization, pulverization conditions (micronization conditions) are determined so that a desired crystallite size and a-axis length and c-axis length of the lattice constant can be imparted to the resulting composite tungsten oxide.

In order to obtain the composite tungsten oxide fine particles from the composite tungsten oxide fine particle dispersion liquid, a solvent may be removed by a known method.

Further, the bulk body or particles of the composite tungsten oxide can also be micronized by a dry method using a jet mill, etc.

Even in the case of dry micronization, it is a matter of course to determine the pulverization conditions (micronization conditions) that can impart a desired particle size, crystallite size, and a-axis length and c-axis length of the lattice constant, to the resulting composite tungsten oxide. For example, in the case of using a jet mil, it is sufficient to select a jet mill that has an air volume and processing time that provide appropriate pulverization conditions.

The micronization of the composite tungsten oxide or composite tungsten oxide particles described in "(3) Micronization of composite tungsten oxide" above is the second step according to the present invention.

### 3. Antibacterial effect of composite tungsten oxide fine particles

The composite tungsten oxide fine particles according to the present invention transmits light in the visible region of sunlight with a wavelength of 380 nm to 780 nm and absorbs light in the near-infrared region with a wavelength of 780 nm or more. This absorption of light in the near-infrared region is due to plasmon absorption and polaron absorption of composite tungsten oxide fine particles, and an electronic state of the composite tungsten oxide molecules that constitute the fine particles causes these absorptions to occur. It is presumed that such an electronic state is related to antibacterial and bacteria-eliminating effects.

Since the composite tungsten oxide fine particles are fine particles, they exhibit plasmon absorption and polaron absorption. Therefore, an average particle size of the composite tungsten oxide fine particles is 800 nm or less, preferably 200 nm or less, more preferably 10 nm or more and 200 nm or less, and still more preferably 10 nm or more and 100 nm or less.

The antibacterial effect of the composite tungsten oxide fine particles according to the present invention is evaluated by conducting a preservative efficacy test in accordance with the method specified in the Japanese Pharmacopoeia, forcibly inoculating and mixing bacterial species to be tested into the composite tungsten oxide fine particle dispersion liquid, and observing the growth and decline of the test bacteria over time.

In this test, the change in bacterial count was evaluated using Escherichia coli ATCC8739 (Escherichia coli), Pseudomonas aeruginosa ATCC9027 (Pseudomonas aeruginosa), Staphylococcus aureus ATCC6538 (Staphylococcus aureus), Candida albicans ATCC102313 (Candida fungus), Aspergillus brasiliensis ATCC16404 (Aspergillus aspergillus) as test strains to evaluate the antibacterial effect.

Further, the antibacterial material dispersion body according to the present invention has also been confirmed to be effective based on JIS L 1902-2015 (Test method for antibacterial properties of textile products and antibacterial effects) and JIS Z 2801 (Antibacterial processed products - Antibacterial test method/Antibacterial effect).

### 4. Antibacterial material dispersion liquid

The antibacterial material dispersion liquid according to the present invention is obtained by mixing and dispersing composite tungsten oxide fine particles of the present invention in a suitable solvent to obtain a composite tungsten oxide fine particle dispersion liquid. The solvent is not particularly limited and may be appropriately selected depending on the purpose. For example, it is possible to use water, and each kind of organic solvent including alcohols such as ethanol, propanol, butanol, isopropyl alcohol, isobutyl alcohol, diacetone alcohol, ethers such as methyl ether, ethyl ether, propyl ether, esters, ketones such as acetone, methyl ethyl ketone, diethyl ketone, cyclohexanone, isobutyl ketone, and aromatic hydrocarbons such as toluene.

Further, if necessary, an acid or alkali may be added to the dispersion liquid to adjust pH.

Further, a resin monomer or oligomer may be used as the solvent for the dispersion liquid.

On the other hand, in order to further improve the dispersion stability of the fine particles in the dispersion liquid, it is of course possible to add various dispersants, surfactants, coupling agents, etc.

Commercially available dispersants that can be suitably used include one or more selected from Solspers (registered trademark) 9000, 12000, 17000, 20000, 21000, 24000, 26000, 27000, 28000, 32000, 35100, 54000, 250 (manufactured by Japan Lubrizol Co., Ltd.). ), EFKA (registered trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 67 00 , 6780, 6782, 8503 (manufactured by Efka Additives), Ajisper (registered trademark) PA111, PB821, PB822, PN411, Famex L-12 (manufactured by Mainomoto Fine Techno Co., Ltd.), DisperBYK (registered trademark) 101, 102, 106, 108, 111, 116, 130, 140, 142, 145, 161, 162, 163, 164, 166, 167, 168, 170, 171, 174, 180, 182, 192 , 193, 2000, 2001, 2020, 2025, 2050, 2070, 2155, 2164, 220S, 300, 306, 320, 322, 325, 330, 340, 350, 377, 378, 380N, 410, 425, 430 (Pick Chem. Manufactured by Japan Co., Ltd.) Dispan (registered trademark) 1751N, 1831, 1850, 1860, 1934, DA-400N, DA-703-50, DA-725, DA-705, DA-7301, DN-900, NS-5210, NVI-8514L (manufactured by Kusumoto Kasei Co., Ltd.), and Alphon (registered trademark) UC-3000, UF-5022, UG-4010, UG-4035, UG-4070 (manufactured by Toagosei Co., Ltd.), etc.

As the dispersant that can be added when water is used as a solvent, it is preferable to add a water-soluble dispersant having an amino group. For example, preferable examples of commercially available dispersants include Disperbyk 183, Disperbyk 185, Disperbyk 184, Disperbyk 190, Disperbyk 191, and Disperbyk 2010 (manufactured by Byck Chemie).

Further, amino acid such as serine and phenylalanine may be added as the dispersant.

Further, as a preferable dispersant, a water-soluble dispersant including an oxoacid can also be used. Here, as the oxoacid, a carboxyl group can be preferably used. For example, preferable examples of the commercially available dispersants include Solsperse 41090, Solsperse 43000, Solsperse 44000, Solsperse 46000, Solsperse 47000, and Solsperse 53095 (manufactured by Lubrizol).

When the antibacterial material dispersion liquid contains 80 parts by weight or more of a solvent with respect to 100 parts by weight of composite tungsten oxide fine particles, preservability as a dispersion liquid can be easily ensured, and workability can also be ensured in the subsequent production of an antibacterial material dispersion body.

The method of dispersing composite tungsten oxide fine particles in a solvent is a method of uniformly dispersing the fine particles in a dispersion liquid, and is not particularly limited as long as the particle size of the composite tungsten oxide fine particles can be adjusted to 800 nm or less while ensuring the following range in the crystal structure of the composite tungsten oxide fine particles: the a-axis is 7.3850 Å or more and 7.4186 Å or less, the c-axis is 7.5600 Å or more and 7.6240 Å or less, preferably the a-axis is 7.4031 Å or more and 7.4186 Å or less, and the c-axis is 7.5830 Å or more and 7.6240 Å, and more preferably, the a-axis is 7.4031 Å or more and 7.4111 Å or less, and the c-axis is 7.5891 Å or more and 7.5950 Å or less. Examples of the dispersing method include bead mills, ball mills, sand mills, paint shakers, and ultrasonic homogenizers.

Micronization of the composite tungsten oxide particles and fluctuations in the a-axis length and c-axis length, which are lattice constants in the hexagonal crystal structure, differ depending on the device constants of the pulverization device. Accordingly, it is essential to perform trial pulverization in advance to determine the pulverization device and pulverization condition that can impart a predetermined particle size, crystallite size, a-axis length and c-axis length of the lattice constant, to the composite tungsten oxide fine particles.

Even when the composite tungsten oxide particles are micronized through the composite tungsten oxide particle dispersion liquid, and then the solvent is removed to obtain the composite tungsten oxide fine particles, of course, it is necessary to determine the pulverization conditions (micronization conditions) that can impart the particle size, crystallite size, a-axis length and c-axis length of the lattice constant.

The step of obtaining the composite tungsten oxide fine particle dispersion liquid is a second step according to the present invention.

The state of the composite tungsten oxide particle dispersion liquid according to the present invention can be confirmed by measuring a dispersion state of the composite tungsten oxide particles when the tungsten oxide particles are dispersed in a solvent. For example, the composite tungsten oxide particle dispersion liquid according to the present invention can be confirmed by sampling a sample from a liquid in which the composite tungsten oxide fine particles according to the present invention exist as particles and aggregated particles in a solvent, and measuring the sample using various commercially available particle size distribution meters. As the particle size distribution meter, for example, a known measuring device such as ELS-8000 manufactured by Otsuka Electronics Co., Ltd., which is based on a dynamic light scattering method, can be used.

Further, the crystal structure and lattice constant of the composite tungsten oxide fine particles are measured as follows: the crystal structure contained in the composite tungsten oxide fine particles obtained by removing the solvent from the composite tungsten oxide fine particle dispersion liquid, is identified by X-ray diffraction, and a-axis length and c-axis length are calculated as lattice constants by using the Rietveld method.

The dispersed particle size of the composite tungsten oxide fine particles is preferably 800 nm or less, which is sufficiently fine. Further, the composite tungsten oxide fine particles are preferably uniformly dispersed.

This is because when the dispersed particle size of the composite tungsten oxide fine particles is 800 nm or less, preferably 200 nm or less, more preferably 10 nm or more and 200 nm or less, and even more preferably 10 nm or more and 100 nm or less, the composite tungsten oxide fine particles necessary for the expression of antibacterial and bacteria-eliminating effects are ensured.

The dispersed particle size according to the present invention means the particle size of a single particle of the composite tungsten oxide fine particles dispersed in a composite tungsten oxide fine particle dispersion liquid, which is an antibacterial material dispersion liquid, or an aggregated particle in which the composite tungsten oxide fine particles are aggregated. The dispersed particle size can be measured using various commercially available particle size distribution meters. For example, a sample of the antibacterial material dispersion liquid can be collected and measured using a particle size measuring device (ELS-8000 manufactured by Otsuka Electronics Co., Ltd.) based on a dynamic light scattering method.

Further, an average particle size of the composite tungsten oxide fine particles in the antibacterial material dispersion liquid can be measured and calculated from a transmission electron microscope image after removing the solvent. The dispersed particle size of the composite tungsten oxide fine particles is 800 nm or less, preferably 200 nm or less, more preferably 10 nm or more and 200 nm or less, and even more preferably 10 nm or more and 100 nm or less.

The obtained composite tungsten oxide fine particle dispersion liquid functions as an antibacterial material dispersion liquid according to the present invention.

### 5. Antibacterial material dispersion body

An antibacterial material dispersion body according to the present invention is obtained by dispersing the composite tungsten oxide fine particles according to the present invention in a medium such as a resin. In the antibacterial material dispersion body, the composite tungsten oxide fine particles according to the present invention maintain a dispersed state in a medium after being mechanically pulverized under predetermined conditions. Then, the surface of the composite tungsten oxide fine particles according to the present invention is exposed on the surface of the antibacterial material dispersion body according to the present invention, and exhibits an antibacterial effect.

Then, examples of the antibacterial material dispersion body include an antibacterial film in which an antibacterial material dispersion body is formed on the surface of a base material and an article, an antibacterial plate in which an antibacterial material dispersion body is formed in a plate shape, and an antibacterial film in which an antibacterial material dispersion body is formed in a film shape, and further include an antibacterial molded article made of an antibacterial material dispersion body molded into a shape of a container or other articles, and include antibacterial fiber obtained by processing an antibacterial material dispersion body into fiber, and an antibacterial yarn and fabric obtained from the antibacterial fiber.

Hereinafter, the antibacterial material dispersion body according to the present invention will be explained in the following order: (1) Method for producing the antibacterial material dispersion body, and (2) Antibacterial film in which the antibacterial material dispersion body is formed on the surface of a base material or article.

### (1) Method for producing antibacterial material dispersion body

To disperse the antibacterial material according to the present invention in a medium, it may be penetrated from the surface of the medium, or after the medium such as a polycarbonate resin is melted by raising the temperature above its melting temperature, the antibacterial material according to the present invention and the medium are mixed to obtain an antibacterial material dispersion body according to the present invention. The antibacterial material dispersion body thus obtained can be formed into a film or board shape by a predetermined method to obtain an antibacterial board.

For example, as a method for dispersing the antibacterial material according to the present invention in PET resin, first, PET resin and the antibacterial material dispersion liquid according to the present invention after being mechanically pulverized under predetermined conditions are mixed, and the dispersion solvent is evaporated, and the PET resin is heated to about 300°C, which is the melting temperature of PET resin, and the PET resin is melted and mixed, and then stretched into a film. Thereby, it becomes possible to produce an antibacterial film in which the antibacterial material according to the present invention is dispersed.

Further, after mixing the antibacterial material according to the present invention and a resin pellet and evaporating the dispersion solvent, and the mixture was heated to the melting temperature of the resin, thereby melting the resin, then, the melted resin is mixed with the antibacterial material and injection-molded. Thereby, it is possible to obtain an antibacterial molded body molded into the shape of a container or other articles.

It is also possible to mix the synthetic fiber resin and an antibacterial material according to the present invention and mold the mixture into a fiber to form an antibacterial synthetic fiber, and to obtain antibacterial thread (textile product) from the antibacterial synthetic fiber and process the antibacterial thread into antibacterial fabric (textile product).

The synthetic fibers to be applied are not particularly limited, but include, for example, aliphatic polyamide fibers (nylon, nylon 6, nylon 66, nylon 11, nylon 610, nylon 612, etc.), polyester fibers (polyethylene terephthalate, polybutylene terephthalate, polytrimethylene terephthalate, polyethylene naphthalate, etc.), acrylic fibers (polyacrylonitrile, acrylonitrile-vinyl chloride copolymer, modacrylic, etc.), polyurethane fibers, aromatic polyamide fibers (aromatic nylon, aramid, etc.), polyvinyl alcohol fibers (vinylon, etc.), polyvinylidene chloride fibers (vinylidene, etc.), polyvinyl chloride fibers (polyvinyl chloride, etc.), polyolefin fibers (polyethylene, polypropylene, polystyrene, etc.), polyclar fibers, polylactic acid fibers, etc.

The thickness of the antibacterial synthetic fiber is preferably 1 to 50 µm, more preferably 1 to 20 µm, and even more preferably 1 to 10 µm. The thickness of the antibacterial synthetic fiber affects the flexibility of the antibacterial thread (textile product) obtained by twisting and bundling (i.e., processing) multiple synthetic fibers, then, ultimately weaving (i.e., processing) the antibacterial thread, and affects the flexibility of the resulting antibacterial fabric (textile product). For this reason, when the thickness of the antibacterial synthetic fiber exceeds 50 µm, the resulting yarn or fabric may become hard.

The average particle size of the composite tungsten oxide fine particles, which is the antibacterial material contained in the antibacterial material dispersion body, can be calculated by measuring the antibacterial material dispersion body using a transmission electron microscope. The average particle size is 800 nm or less, preferably 200 nm or less, more preferably 10 nm or more and 200 nm or less, and even more preferably 10 nm or more and 100 nm or less.

### (2) Antibacterial film in which the antibacterial material dispersion body is formed on the surface of a base material or article

A coating liquid is obtained by adding a liquid resin or a binder to the antibacterial material dispersion liquid according to the present invention. Then, by curing the resin or binder in the coating liquid by a predetermined method after coating the surface of the base material or article with the coating liquid, an antibacterial film in which the antibacterial material according to the present invention is dispersed in a resin or binder is formed on the surface of a base material or article.

The method of coating with the coating liquid is not particularly limited as long as the coating liquid can be uniformly coated on the surface of the base material or article, but examples of the coating method include bar coating, gravure coating, spray coating, dip coating, etc.

The resin includes resin monomer and oligomer before curing as well as resin dissolved in a solvent. As the resin, UV curing resin, thermosetting resin, electron beam curing resin, room temperature curing resin, thermoplastic resin, etc., can be selected depending on the purpose. Specifically, polyethylene resin, polyvinyl chloride resin, polyvinylidene chloride resin, polyvinyl alcohol resin, polystyrene resin, polypropylene resin, ethylene vinyl acetate copolymer, polyester resin, polyethylene terephthalate resin, fluorine resin, polycarbonate resin, acrylic resin, polyvinyl butyral resin, can be used. These resins may be used alone or in combination.

The binder includes a binder in which a metal alkoxide is used. Typical examples of the metal alkoxide include alkoxides of Si, Ti, Al, Zr, etc. The binder with use of the metal alkoxide can form an oxide film by subjecting them to hydrolysis and condensation polymerization by heating, etc.

Further, a plate-like base material or a film-like base material can be used as the base material. Further, the articles include: articles including fixtures such as furniture and tools used in daily life, articles such as mobile machines including vehicles, electrical and electronic devices such as home appliances, personal computers, and mobile phones.

Here, when a colorless and transparent resin or binder that transmits visible light is used, composite tungsten oxide fine particles will transmit visible light, so it is possible to obtain an antibacterial material dispersion body that is colorless and transparent to visible light. By forming a colorless and transparent antibacterial material dispersion body on the surface of an article, the color tone of the article is not damaged, color is not changed, nor is changed even when exposed to H₂S gas or SO₂ gas in the atmosphere, resulting in excellent design.

### Examples

Hereinafter, the present invention will be described in more detail with reference to examples, but the present invention is not limited thereto.

Further, to measure the crystal structure, lattice constant, and crystallite size of the composite tungsten oxide fine particles according to the present invention, composite tungsten oxide fine particles obtained by removing the solvent from the antibacterial material dispersion liquid were used. Then, an X-ray diffraction pattern of the composite tungsten oxide fine particles was measured by powder X-ray diffraction method (θ-2θ method) using a powder X-ray diffraction device (X'Pert-PRO/MPD manufactured by PANalytical, Spectris Co., Ltd.). The crystal structure contained in the fine particles was identified from the obtained X-ray diffraction pattern, and the lattice constant and crystallite size were further calculated using the Rietveld method.

### (Example 1)

A solution was obtained by dissolving 7.43 kg of cesium carbonate (Cs₂CO₃) in 6.70 kg of water. The solution was added to 34.57 kg of tungstic acid (H₂WO₄), thoroughly stirred and mixed, and then dried while stirring (the molar ratio of W to Cs is equivalent to 1 : 0.33). The dried product was heated while supplying 5% by volume H₂ gas with N₂ gas as a carrier, and baked at a temperature of 800°C for 5.5 hours, then, the supplied gas was switched to only N₂ gas, and the temperature was lowered to room temperature to obtain Cs tungsten oxide particles (A1).

20% by mass of the Cs tungsten oxide particles (A1), 10% by mass of the cationic surfactant (hereinafter referred to as "additive a"), and 70% by mass of water were weighed, loaded into a paint shaker (Manufactured by Asada Iron Works) containing 0.3 mmϕ ZrO₂ beads, and subjected to pulverization/dispersion treatment for 20 hours, to prepare an antibacterial material dispersion liquid (liquid A) according to example 1.

Here, the dispersed particle size of the pulverized Cs tungsten oxide fine particles (A2) in the antibacterial material dispersion liquid (liquid A) was measured with a particle size measuring device (ELS-8000 manufactured by Otsuka Electronics Co., Ltd.) based on a dynamic light scattering method, and was found to be 80 nm. Further, after removing the solvent from the antibacterial material dispersion liquid (liquid A), the crystal structure of the Cs tungsten oxide fine particles (A2) was confirmed to be hexagonal, and the lattice constants were confirmed to be 7.4073 Å for the a-axis, and 7.6185 Å for the c-axis. Further, the crystallite size was confirmed to be 30 nm.

Further, Cs tungsten oxide fine particles (A2) were observed with a transmission electron microscope and an average particle size was calculated to be 35 nm.

A preservative efficacy test was performed for the antibacterial material dispersion liquid (liquid A) in accordance with a preservative efficacy test method specified in the Japanese Pharmacopoeia. An antibacterial effect was determined based on the reduction in bacteria by storing the bacteria at 25°C immediately after inoculation and 28 days after inoculation. Items in which bacteria were killed during storage for 28 days were rated ⊚, items with no change in the number of bacteria were rated O, and items with an increased number of bacteria were rated ×. The results are shown in Table 1. The number of bacteria was confirmed on an agar medium.

### (Example 2)

An antibacterial material dispersion liquid (liquid B) according to example 2 was obtained in the same manner as in example 1 except that 20% by mass of Cs tungsten oxide particles (A1), 10% by mass of an anionic surfactant (hereinafter referred to as "additive b"), and 70% by mass of water were weighed. The dispersed particle size of the pulverized composite tungsten oxide fine particles (B2) in the antibacterial material dispersion liquid (liquid B) was found to be 75 nm. After removing the solvent from the antibacterial material dispersion liquid (liquid B), the crystal structure of the Cs tungsten oxide fine particles (B2) was confirmed to be hexagonal, and the lattice constants were confirmed to be 7.4072 Å for the a-axis and 7.6186 Å for the c-axis. Further, the crystallite size was confirmed to be 29 nm. Further, the Cs tungsten oxide fine particles (B2) were observed with a transmission electron microscope and an average particle size was calculated to be 35 nm.

Next, a preservative efficacy test was performed in the same manner as in example 1 using the antibacterial material dispersion liquid (liquid B) according to example 2. The results are shown in Table 1.

### (Example 3)

An antibacterial material dispersion liquid (liquid C) according to example 3 was obtained in the same manner as in example 1 except that 20% by mass of Cs tungsten oxide particles (A1), 10% by mass of nonionic surfactant (hereinafter referred to as "additive c"), and 70% by mass of water were weighed. The dispersed particle size of the pulverized composite tungsten oxide fine particles (C2) in the antibacterial material dispersion liquid (liquid C) was found to be 80 nm. After removing the solvent from the antibacterial material dispersion liquid (liquid C), the crystal structure of the Cs tungsten oxide fine particles (C2) was confirmed to be hexagonal, and the lattice constants were measured to be 7.4071 Å for the a-axis was and 7.6184 Å for the c-axis. Further, the crystallite size was found to be 35 nm. Further, the Cs tungsten oxide fine particles (C2) were observed with a transmission electron microscope and an average particle size was calculated to be 42 nm.

Next, a preservative efficacy test was performed in the same manner as in example 1, using the antibacterial material dispersion liquid (liquid C) according to example 3. The results are shown in Table 1.

### (Example 4)

An antibacterial material dispersion liquid (liquid D) according to example 4 was obtained in the same manner as in example 1, except that 20% by mass of the Cs tungsten oxide particles (A1), 10% by mass of a polymer dispersant containing an amine as a functional group (amine value 50mgKOH/g) (hereinafter referred to as "additive d"), and 70% by mass of water were weighed. The dispersed particle size of the pulverized composite tungsten oxide fine particles (D2) in the antibacterial material dispersion liquid (liquid D) was found to be 85 nm. After removing the solvent from the antibacterial material dispersion liquid (liquid D), the crystal structure of the Cs tungsten oxide fine particles (D2) was confirmed to be hexagonal, and the lattice constants were measured to be 7.4074 Å for the a-axis and was 7.6179 Å for the c-axis. Further, the crystallite size was found to be 35 nm. Further, Cs tungsten oxide fine particles (D2) was observed with a transmission electron microscope, and an average particle size was calculated to be 40 nm.

Next, a preservative efficacy test was performed in the same manner as in example 1, using the antibacterial material dispersion liquid (liquid D) according to example 4. The results are shown in Table 1.

### (Comparative example 1)

A mixed liquid (liquid E) according to comparative example 1 was obtained by weighing and mixing 10% by mass of additive a and 90% by mass of water without adding Cs tungsten oxide particles (A1).

Next, a preservative efficacy test was performed in the same manner as in example 1 using the mixed liquid (liquid E) according to comparative example 1. The results are shown in Table 1.

### (Comparative example 2)

A mixed liquid (liquid F) according to comparative example 2 was obtained by weighing and mixing 10% by mass of additive b and 90% by mass of water without adding Cs tungsten oxide particles (A1).

Next, a preservative efficacy test was performed in the same manner as in example 1, using the mixed liquid (liquid F) according to comparative example 2. The results are shown in Table 1.

### (Comparative example 3)

A mixed liquid (liquid G) according to comparative example 3 was obtained by weighing and mixing 10% by mass of additive c and 90% by mass of water without adding Cs tungsten oxide particles (A1).

Next, a preservative efficacy test was performed in the same manner as in example 1, using the mixed liquid (liquid G) according to comparative example 3. The results are shown in Table 1.

### (Comparative example 4)

A mixed liquid (liquid H) according to comparative example 4 was obtained by weighing and mixing 10% by mass of additive d and 90% by mass of water without adding Cs tungsten oxide particles (A1).

Next, a preservative efficacy test was performed in the same manner as in example 1, using the mixed liquid (liquid H) according to comparative example 4. The results are shown in Table 1.

### (Comparative example 5)

A preservative efficacy test was performed in the same manner as in example 1, except that pure water was used in place of the antibacterial material dispersion liquid (liquid A). The results are shown in Table 1.

### (Conclusion)

As is clear from Table 1, it was found that in the antibacterial material dispersion liquids of examples 1 to 4, in which the antibacterial material of the present invention was dispersed, bacteria were killed or the growth of bacteria was suppressed. In contrast, in the mixed liquids according to comparative examples 1 to 4 and the pure water according to comparative example 5, in which the antibacterial material according to the present invention was not dispersed, bacteria increased.

From the above, it was found that the antibacterial material and the antibacterial material dispersion liquid according to the present invention have an antibacterial effect.

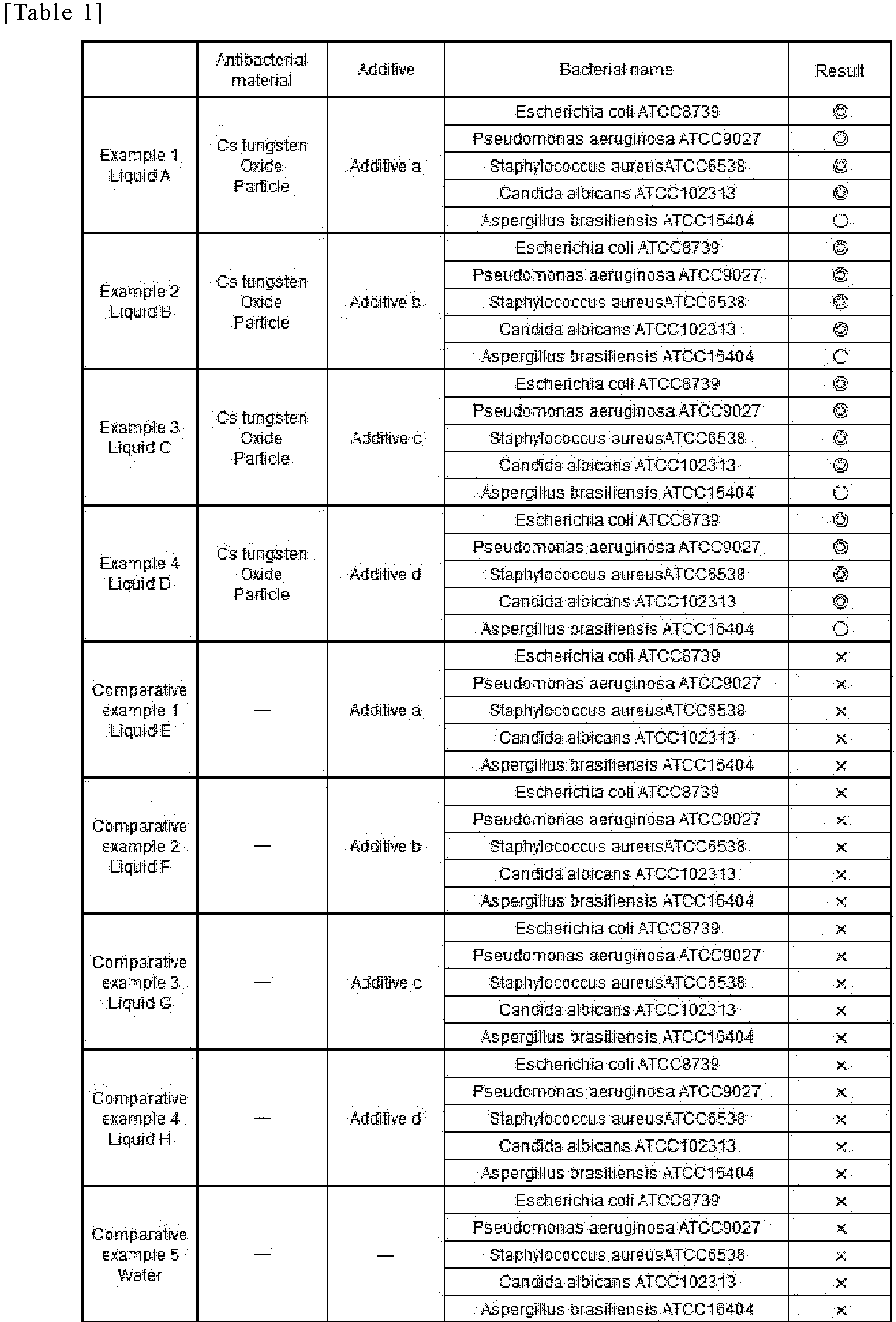

⊚: Bacteria die, ○: No change in the number of bacteria, ×: The number of bacteria increases

### Industrial applicability

By applying the composite tungsten oxide according to the present invention to, for example, a solid surface or mixing it with other powders or liquids, the antibacterial effect can be effectively imparted.

## Claims

1. An antibacterial material containing composite tungsten oxide fine particles, which is represented by a general formula MxWyOz (wherein element M is one or more elements selected from alkali metals and alkaline earth metals, W is tungsten, O is oxygen, and 0.01 ≤ x/y ≤ 1.0, 2.2 ≤ z/y ≤ 3.0).

2. The antibacterial material according to claim 1, wherein the composite tungsten oxide fine particles include a hexagonal crystal structure.

3. The antibacterial material according to claim 1 or 2, wherein the composite tungsten oxide fine particles have an average particle size of 10 nm or more and 200 nm or less.

4. An antibacterial material dispersion liquid containing the antibacterial material according to any one of claims 1 to 3 and a solvent.

5. An antibacterial material dispersion body containing the antibacterial material according to any one of claims 1 to 3 and a solid medium.

6. A method for producing an antibacterial material, comprising:
a first step of producing a composite tungsten oxide having a hexagonal crystal structure expressed by a general formula MxWyOz (wherein, element M include one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, and 0.01≤ x/y ≤ 1.0, 2.2 ≤ z/y ≤ 3 .0); and
a second step of mechanically pulverizing the composite tungsten oxide obtained in the first step, to produce composite tungsten oxide fine particles having a lattice constant in a hexagonal crystal structure in which a-axis is 7.3850 Å or more and 7.4186 Å or less and c-axis is 7.5600 Å or more and 7.6240 Å or less, and having a particle size of 100 nm or less.
